# EUROPÄISCHE PATENTANMELDUNG

(11) **EP 1 993 059 A1**
(43) Veröffentlichungstag der Anmeldung: **19.11.2008**
(21) Anmeldenummer: 07009641.7
(22) Anmeldetag: 14.05.2007
(51) Int. Cl.: G06F 21/20

(54) **Verfahren und Vorrichtung zur Authentifikation PIN-bezogener Eingaben.**

(71) Anmelder: Nokia Siemens Networks Oy, 02610 Espoo (FI)
(72) Erfinder: Raaf, Bernhard, 82061 Neuried (DE)
(74) Vertreter: Bruglachner, Thomas E.

(57) **Zusammenfassung**

Die vorliegende Erfindung bezieht sich auf ein Verfahren und eine Vorrichtung zur Authentifizierung PIN-bezogener Eingaben. Das Verfahren sieht eine Authentifikation PIN-bezogener Eingaben mit den folgenden Schritten vor:
(a) Überprüfen einer PIN-Eingabe dahingehend, ob es sich bei der eingegebenen PIN um eine fehlerhafte oder um eine korrekte PN handelt;
(b) Klassifikation der überprüften PIN-Eingabe, sofern die überprüfte PIN fehlerhaft ist.

## Beschreibung

Verfahren und Vorrichtung zur Authentifikation PIN-bezogener Eingaben.

Die vorliegende Erfindung bezieht sich auf ein Verfahren und eine Vorrichtung zur Authentifizierung PIN-bezogener Eingaben.

Zur Authentifizierung eines berechtigten Benutzers wird häufig eine persönliche Identifikationsnummer verwendet. Eine solche persönliche Identifikationsnummer, die meist kurz als PIN (PIN = Personal Identification Number) bezeichnet wird, ist eine Geheimzahl oder ein Passwort, welche einer oder nur wenigen "berechtigten" Personen bekannt ist und mit der diese sich gegenüber einem elektronischen System authentifizieren können. Umgangssprachlich wird als PIN häufig auch PIN-Code oder das redundante Akronym PIN-Nummer verwendet.

Eine sehr häufige Anwendung für solche PINs ist die Authentifizierung an einem Geldautomaten. Bei der Authentifikation an einem Geldautomaten ist die Eingabe einer mehrstelligen PIN erforderlich, um einen Kontozugriff durch unbefugte Personen zu verhindern oder zumindest signifikant zu schweren. Neben dieser Anwendung werden PINs auch bei sehr vielen anderen Anwendungen, so z. B. beim Internetbanking, bei der Zugangsberechtigung in einem Kraftfahrzeug, bei der Authentifizierung eines mobilen oder lokalen PCs, einem Mobiltelefon und dergleichen, verwendet. Obgleich bei belieben Anwendungen einsetzbar, wird die vorliegende Erfindung sowie die ihr zugrunde liegende Problematik nachfolgend mit Bezug auf eine Authentifikation an einem Geldautomaten näher erläutert, ohne die Erfindung allerdings dahingehend einzuschränken.

Bei der Verwendung einer Scheck- oder Kreditkarte in einem Geldautomaten führt der berechtigte Nutzer die PIN-geschützte Karte in den Automaten ein und gibt anschließend seine PIN ein. Eine Authorisierungszentrale prüft z. B. Online die Richtigkeit der eingegebenen PIN und entscheidet, ob die dieser PIN-Eingabe nachfolgende Aktion, wie z. B. das Abrufen von Kontoauszügen oder eine Geldabhebung, authorisiert ist und somit erfolgen kann. Ein mit der Verwendung solcher PINgeschützter EC- und Kreditkarten einhergehendes Problem ist die Sicherstellung deren Sicherheit. Kommt ein unberechtigter Nutzer in Besitz einer solchen EC- oder Kreditkarte, dann muss unbedingt verhindert werden, dass er diese EC- und Kreditkarte zum Schaden dessen Eigentümers nutzt. Ein solcher unberechtigter Nutzer, nachfolgend als Betrüger bezeichnet, der eine EC-Karte gefunden oder gestohlen hat, wird zunächst versuchen, damit an einem Geldautomaten Geld abzuheben. Auch wenn er die korrekte PIN nicht kennt, kann er versuchen, sie zu erraten.

Heutige EC-Karten weisen meist eine vierstellige PIN auf. Bei diesen vierstelligen EC-Karten-PINs ist die Wahrscheinlichkeit, dass der Betrüger die PIN mit einem Versuch erraten kann, rechnerisch 1/9.999 und faktisch ungefähr 1/8.500, da von den 9.999 möglichen PINs typischerweise einige Ziffernkombinationen ausgeschlossen sind, beispielsweise alle Kombinationen in denen eine Ziffer mehr als zweimal auftaucht. Da jedoch im Allgemeinen bis zu drei Versuche erlaubt sind, hat der Betrüger somit eine Wahrscheinlichkeit von etwa 1/2.800, die richtige PIN zu erraten. Wenn nun, wie z. B. beim Onlinebanking, eine fünfstellige PIN mit ausschließlicher Nutzung von Ziffern vorgegeben ist, verringert sich somit (unter Vernachlässigung der Beschränkung von Kombinationen) eine Ratewahrscheinlichkeit auf ungefähr 1/33.000. Falls zusätzlich auch Kleinbuchstaben verwendet werden, verringert sich die Wahrscheinlichkeit auf ungefähr 1/20.000.000.

Dies sind relativ geringe Wahrscheinlichkeiten für das betrügerische Erraten einer PIN, sodass damit eine relativ hohe PIN-Sicherheit gegeben ist. Allerdings ermöglichen moderne elektronische Systeme das automatisierte Generieren der PINs. Aus diesem Grunde ist die Anzahl der zugelassenen PIN-Eingaben typischerweise beschränkt, um eben einen solchen missbräuchlichen Versuch der betrügerischen PIN-Ermittlung auf ein Mindestmaß zu reduzieren. Beispielsweise ist bei heutigen Geldautomaten lediglich eine dreimalige PIN-Eingabe zugelassen. Wird anschließend ein viertes Mal die nicht korrekte PIN eingegeben, dann wird die dazugehörige EC-Karte typischerweise im Geldautomaten einbehalten oder zumindest permanent gesperrt, selbst dann, wenn anschließend wieder eine richtige Eingabe erfolgt, da man davon ausgehen muss, dass ein Betrüger die PIN-Eingabe getätigt hat.

Problematisch an dieser bekannten Lösung ist allerdings, dass auch die EC-Karte eines berechtigten Benutzers gesperrt oder eingezogen wird, wenn er z. B. mehrfach dieselbe falsche PIN eingibt, beispielsweise dann, wenn sich z. B. die PIN geändert hat und er versehentlich mehrfach die alte, nicht mehr gültige PIN eingegeben hat. Ein ähnliches Problem ergibt sich, wenn ein berechtigter Benutzer beispielsweise eine Vielzahl von EC-Karten besitzt und beispielsweise eine PIN einer ersten EC-Karte fälschlicherweise einer zweiten EC-Karte zuordnet und diese falsche PIN mehrfach eingibt, beispielsweise aufgrund einer Annahme, er habe sich vertippt. Ein ähnliches Problem ergibt sich, wenn der berechtigte Benutzer versehentlich eine Taste gedrückt hat und z. B. durch Wiederholung dieser Tasteneingabe ebenfalls dieselbe falsche PIN wiederholt eingibt.

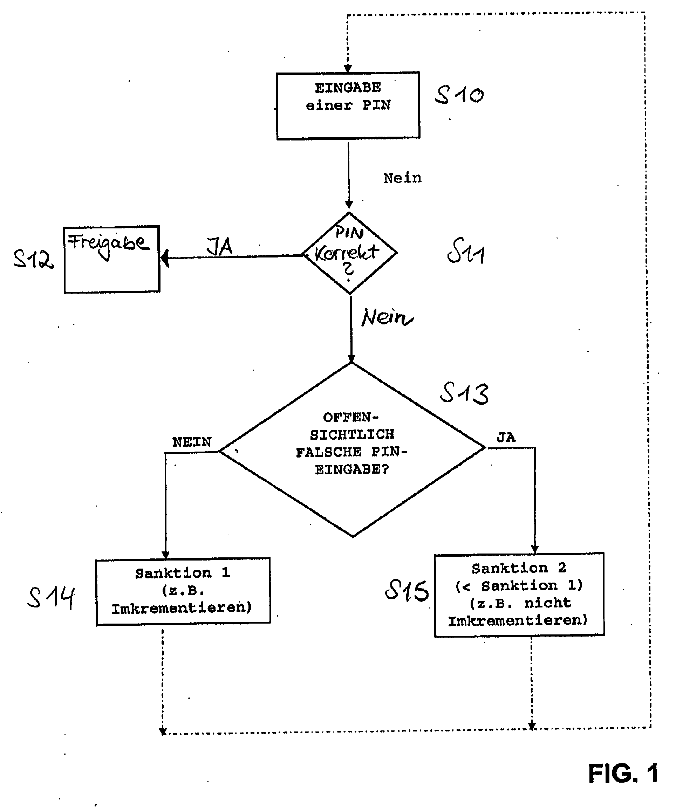

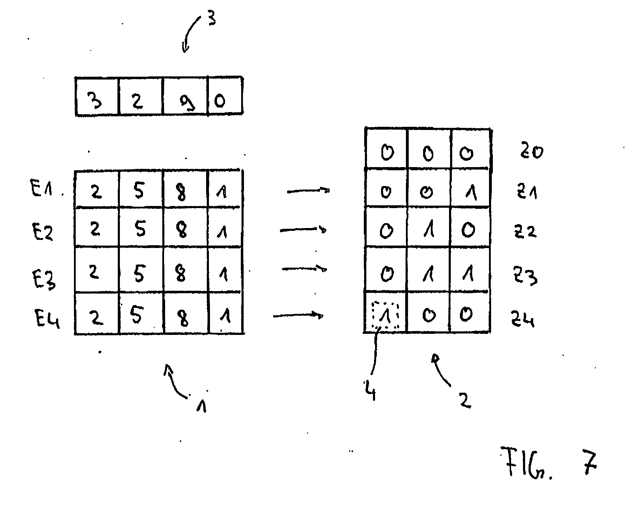

Dieses oben genannte Problem wird nachfolgend anhand einer kurzen schematischen Darstellung der Fig. 7 erläutert. Es sei davon ausgegangen, dass eine korrekte PIN 3 für eine EC-Karte die Ziffernfolge "3290" bezeichnet. In der linken Spalte von Figur 1 ist mit Bezugszeichen 1 eine Tastatureingabe zur Eingabe einer PIN dargestellt. Auf der rechten Spalte ist der entsprechende Zählerstand 2 für eine fehlerhafte PIN-Eingabe, der beispielsweise in einem Geldautomaten vorgesehen ist, hinterlegt. Die PIN ist dezimal kodiert, wohingegen der Zählerstand binär kodiert ist. Es sei ferner davon ausgegangen, dass der Zählerstand 2 zu Beginn einer PIN-Eingabe zurückgesetzt ist, das heißt der anfängliche Zählerstand beträgt Z0=000.

Wird nun die EC-Karte in den Geldautomaten geschoben, dann ist eine erste PIN-Abfrage erforderlich. Es sei davon ausgegangen, dass der berechtigte Nutzer dieser EC-Karte nicht die richtige PIN "3290" eingibt, sondern eine falsche, beispielsweise veraltete PIN E1: 2581. Da es sich hier um eine falsche PIN handelt, wird der Zählerstand um "1" inkrementiert, d. h. Z1=001. Ist sich z. B. der berechtigte Nutzer nicht bewusst, dass es sich hier um eine alte PIN handelt, wird er in den darauffolgenden Eingaben E2-E4 eventuell versuchen, dieselbe veraltete PIN "2581" einzugeben. In der Folge zählt der Zählerstand Z2 - Z4 jeweils um "1" nach oben bis zum Zählerstand Z4=100. Beträgt das MSB-Bit 4 im Zählerstand "1", was erstmals für den Zählerstand Z4 zutrifft, dann wird dies als viermalige fehlerhafte PIN-Eingabe interpretiert. In der Folge wird als Sanktion z. B. die entsprechende EC-Karte im Geldautomaten einbehalten. Diese sehr strenge Sanktion wird auch dann ausgeführt, wenn zwar eine fehlerhafte PIN-Eingabe stattgefunden hat, jedoch stets dieselbe fehlerhafte PIN eingegeben wurde.

Vor diesem Hintergrund liegt der vorliegenden Erfindung die Aufgabe zugrunde, eine bessere Authentifikation einer PINbezogenen Eingabe zu ermöglichen.

Erfindungsgemäß wird diese Aufgabe durch ein Verfahren mit den Merkmalen des Patentanspruchs 1 und/oder durch eine Vorrichtung mit den Merkmalen des Patentanspruchs 24 gelöst.

### Demgemäß ist vorgesehen:

Ein Verfahren zur Authentifikation PIN-bezogener Eingaben für eine PIN-geschützte Einrichtung, mit den Schritten:
(a) Überprüfen einer PIN-Eingabe dahingehend, ob es sich bei der eingegebenen PIN um eine fehlerhafte oder um eine korrekte PN handelt;
(b) Klassifikation der überprüften PIN-Eingabe, sofern die überprüfte PIN fehlerhaft ist.

Eine Vorrichtung zur Authentifikation PIN-bezogener Eingaben für eine PIN-geschützte Einrichtung, mit einer Vorrichtung zur PIN-Eingabe, insbesondere eine Tastatur, mit einer Auswerteeinrichtung zur Überprüfung der PIN-Eingabe nach Maßgabe des erfindungsgemäßen Verfahrens.

Die der vorliegenden Erfindung zugrunde liegende Idee besteht darin, bei der Sanktionierung einer fehlerhaften PIN-Eingabe zu unterscheiden, ob es sich hier um eine tatsächlich fehlerhafte PIN-Eingabe handelt oder ob es sich um eine offensichtlich fehlerhafte PIN-Eingabe handelt. Im Falle einer tatsächlich fehlerhaften PIN-Eingabe muss man davon ausgehen, dass diese PIN-Eingabe von einem unberechtigten Nutzer eingegeben wurde und hier somit ein Missbrauch vorliegen könnte. Hingegen ist ein solcher Missbrauch im Falle einer offensichtlich fehlerhaften PIN-Eingabe nicht oder nicht unbedingt zu unterstellen. Die der vorliegenden Erfindung zugrunde liegende Idee besteht in Folge dessen darin, eine offensichtlich fehlerhafte PIN-Eingabe mit einer zumindest geringeren Sanktion zu belegen, als eine tatsächlich fehlerhafte PIN-Eingabe.

Bei dem erfindungsgemäßen Verfahren wird also bei jeder PIN-Eingabe überprüft, ob es sich hier um eine tatsächlich fehlerhafte PIN-Eingabe oder um eine offensichtlich fehlerhafte PIN-Eingabe handelt. Abhängig von diesen beiden zwar fehlerhaften, jedoch unterschiedlich zu bewertenden PIN-Eingaben kann dann eine entsprechende Sanktion für diese fehlerhafte PIN-Eingabe dahingehend festgelegt, dass z. B. die Sanktion der tatsächlich fehlerhaften PIN-Eingabe größer (also mit schwerwiegenden Folgen behaftet) ist als die einer offensichtlich fehlerhaften PIN-Eingabe.

Eine solche Sanktion kann beispielsweise darin bestehen, dass ein Zähler, dessen Zählerstand z. B. als Auslösekriterium für eine Aktion, wie etwa das Sperren oder das Einbehalten einer Karte, verwendet wird, (stärker) inkrementiert oder dekrementiert wird, eine weitere Eingabe nicht mehr zugelassen wird, die entsprechende PIN-geschützte Vorrichtung (z. B. das Mobilfunktelefon, die EC-Karte oder dergleichen) gesperrt oder sogar eingezogen wird, ein akustisches oder optisches Signal ausgegeben wird. Denkbar wären selbstverständlich auch andere Sanktionsmöglichkeiten.

In einer bevorzugten Ausgestaltung des erfindungsgemäßen Authentifikationsverfahrens werden erkannte fehlerhafte PIN-Eingaben abgespeichert. Der Fehlerzähler wird hier bei einer fehlerhaften PIN-Eingabe erstmals inkrementiert. Wird anschließend erneut dieselbe fehlerhafte PIN-Eingabe getätigt, dann wird in diesem Falle als Sanktion z. B. der Fehlerzähler nicht weiter inkrementiert. Dies gilt auch für jede weitere identische fehlerhafte PIN-Eingabe. Dadurch kann der Benutzer beliebig oft eine einzige, identische fehlerhafte PIN eingeben, ohne dass dies eine (gravierende) Sanktion zur Folge hätte. Es wird hier lediglich die erste erkannte fehlerhafte PIN mit einem Inkrementieren des Fehlerzählers sanktioniert. Jede weitere fehlerhafte PIN-Eingabe hat dann keinerlei weitere Sanktionen zur Folge. Es ergibt sich dadurch auch keine Verschlechterung der Sicherheit, da ein missbräuchlicher Nutzer sicherlich darauf achten wird, Tippfehler zu vermeiden, da er genau weiß, dass er nur eine begrenzte Anzahl von Eingabemöglichkeiten hat und daher bei der Eingabe sehr aufmerksam darauf achten wird, nicht mehrfach dieselbe fehlerhafte PIN einzugeben. Hingegeben wird ein berechtigter Benutzer erfahrungsgemäß häufig nicht die gleiche Aufmerksamkeit bei der PIN-Eingabe spendieren, sodass es bei einem berechtigten Nutzer durchaus dazu kommen kann, dass er aus Unachtsamkeit beispielsweise dieselbe fehlerhafte PIN-Eingabe tätigt und eine Nichtakzeptanz eher einem Tippfehler zuschreiben wird als der Tatsache, dass es sich bei dieser PIN-Eingabe eben nicht um die richtige PIN handelt. Mittels des erfindungsgemäßen Verfahrens kann eben diesem Sachverhalt Rechnung getragen werden, indem als Folge der fehlerhaften PIN-Eingabe dem berechtigten Nutzer eine geringere Sanktion zugewiesen wird als einem missbräuchlichen Nutzer, der nach wie vor die volle Sanktion akzeptieren muss.

Einem weiteren, ebenfalls besonders bevorzugten Ausführungsbeispiel liegt die Erkenntnis zugrunde, dass häufig eine falsche PIN eingegeben wird, nachdem diese vorher geändert wurde. Zum Beispiel gibt ein berechtigter Nutzer nach einer Änderung seiner eigenen PIN versehentlich noch seine alte PIN ein, die er gewohnheitsmäßig noch kennt. Mittels des erfindungsgemäßen Verfahrens wird die alte und besonders bevorzugt sämtliche alten PINs gespeichert. Bei der Eingabe dieser alten PIN wird zwar erkannt, dass es sich hier um eine fehlerhafte, also nicht zugelassene PIN handelt, sodass die von dem Benutzer gewünschte Aktion nicht freigegeben wird. Gleichermaßen wird allerdings auch erkannt, dass es sich bei dieser PIN um eine alte PIN des berechtigten Benutzers und somit um eine offensichtlich falsche PIN handelt. In der Folge wird in diesem Falle der Fehlerzähler bei Eingabe einer oder mehrerer alter PINs nicht inkrementiert. Dadurch wird zwar die Sicherheit des gesamten Authentifikationssystems geringfügig kompromitiert, da in diesem Falle ein missbräuchlicher Nutzer unter Umständen einen Versuch mehr für seine missbräuchliche PIN-Eingabe hat. Allerdings steigt die Wahrscheinlichkeit durch zufälliges Ausprobieren, die richtige PIN zu treffen, im Vergleich hier nur marginal an und ist damit vernachlässigbar gering. Da die alte PIN häufig ohnehin von dem System gespeichert wird, um so z. B. zu verhindern, dass der Benutzer bei einer vorangegangenen PIN-Änderung immer wieder eine seiner alten PINs verwendet und dadurch z. B. durch das System vorgeschriebene PIN-Änderungen umgeht, ist hier auch der dafür erforderliche Speicheraufwand zu vernachlässigen. Somit lässt sich diese Anwendungsvariante sehr aufwandsgünstig implementieren, indem der Speicher zur Speicherung alter PINs nun zusätzlich für die erfindungsgemäße Funktionalität zur Ermittlung einer offensichtlich falschen PIN-Eingabe genutzt werden kann.

Bei vielen Authentifikationssystemen ist es dem Benutzer nicht erlaubt, triviale PINs zu verwenden. Bei solchen trivialen PINs handelt es sich z. B. um gängige Wörter, wie z. B. Firmennamen, Namen, feststehende Begriffe oder um gängige Ziffernfolgen, wie z. B. "0000" "1234", "5555", "4711", etc. Zusätzlich oder alternativ kann das System auch vorsehen, dass eine PIN gewisse Eigenschaften haben muss, beispielsweise eine Mindestanzahl von Ziffern, Buchstaben, Großbuchstaben, Kleinbuchstaben, Sonderzeichen und dergleichen. Im Falle einer Änderung dieser PIN bzw. des entsprechenden Passwortes wird die neue PIN zunächst typischerweise auf diese Anforderungen hin überprüft. Dieselbe Überprüfung kann nun zusätzlich auch bei jeder neuen PIN-Eingabe durchgeführt werden, um dadurch zu überprüfen, ob eine offensichtlich falsche PIN beispielsweise durch einen Tippfehler vorhanden ist. In diesem Falle wird der Fehlerzähler nicht hoch gezählt. Diese Variante des erfindungsgemäßen Verfahrens geht ebenfalls von der Erkenntnis aus, dass ein missbräuchlicher Benutzer sicherlich darauf achten würde, nur erlaubte PINs zu verwenden, also solche PINs, die den obigen Anforderungen genügen. Somit dürfte auch diese Variante des erfindungsgemäßen Verfahrens nicht zu einer gravierenden Kompromitierung der Sicherheit der PIN-geschützten Einrichtung führen.

Vorteilhafte Ausgestaltungen und Weiterbildungen der Erfindung ergeben sich aus den weiteren Unteransprüchen sowie aus der Beschreibung in Zusammenschau mit den Figuren der Zeichnung.

In einer bevorzugten Ausgestaltung wird im Verfahrensschritt (a) die eingegebene PIN mit der korrekten PIN, welche zur Authentifizierung und damit zur Freigabe der PIN-geschützten Einrichtung vorgesehen ist, verglichen.

In einer bevorzugten Ausgestaltung liegt eine fehlerhafte PIN vor, wenn die eingegebene PIN sich in mindestens einem Eingabesymbol von der korrekten PIN unterscheidet.

In einer bevorzugten Ausgestaltung wird im Verfahrensschritt (b) die überprüfte fehlerhafte PIN dahingehend klassifiziert, ob es sich hier um eine offensichtlich fehlerhafte PIN oder um eine tatsächlich fehlerhafte PIN handelt.

In einer bevorzugten Ausgestaltung wird eine wiederholt eingegebene fehlerhafte PIN als offensichtlich fehlerhafte PIN klassifiziert.

In einer bevorzugten Ausgestaltung wird eine alte PIN derselben PIN-geschützten Vorrichtung, die nicht mehr gültig ist, als offensichtlich fehlerhafte PIN klassifiziert.

In einer bevorzugten Ausgestaltung wird eine triviale PIN, die von einem Authentifikationssystem der PIN-geschützten Einrichtung als nicht erlaubt vorgegeben wird, als offensichtlich fehlerhafte PIN klassifiziert.

In einer bevorzugten Ausgestaltung sind als triviale PINs solche PINs zu verstehen, die aufgrund ihres Bedeutungsinhalts und/oder ihrer Symbolfolge zur Erhöhung der Sicherheit der PIN-geschützten Einrichtung von der PIN-Authentifikation ausgenommen werden.

In einer bevorzugten Ausgestaltung sind triviale PINs solche PINs, die gängige Wörter, Firmennamen, Namen, feststehende Begriffe, gängige Ziffernfolgen und/oder gängige Symbolfolgen enthalten.

In einer bevorzugten Ausgestaltung wird eine fehlerhafte PIN, die durch das Authentifikationssystem vorgegebene Eigenschaften, beispielsweise eine Mindestanzahl von Ziffern, Buchstaben, Großbuchstaben, Kleinbuchstaben und/oder Sonderzeichen, nicht aufweist, als offensichtlich fehlerhafte PIN klassifiziert.

In einer bevorzugten Ausgestaltung wird eine fehlerhafte PIN, eine alte PIN und/oder eine triviale PIN in einem Speicher abgelegt.

In einer bevorzugten Ausgestaltung ist der weitere Schritt vorgesehen:
(c) Auslösen einer ersten Sanktion, sofern die PIN-Eingabe eine tatsächlich fehlerhafte PIN ist, und Auslösen einer von der ersten Sanktion verschiedenen zweiten Sanktion, sofern die PIN-Eingabe eine offensichtlich fehlerhafte PIN ist.

In einer bevorzugten Ausgestaltung ist die zweite Sanktion geringer, also mit geringeren Folgen behaftet als die erste Sanktion.

In einer bevorzugten Ausgestaltung wird im Falle einer erstmals erkannten fehlerhafte PIN-Eingabe die erste Sanktion ausgelöst und im Falle, dass dieselbe fehlerhafte PIN-Eingabe, insbesondere unmittelbar nach der erstmaligen Eingabe der fehlerhaften PIN-Eingabe, erneut eingegeben wird, die zweite Sanktion ausgelöst.

In einer bevorzugten Ausgestaltung erfolgt die zweite Sanktion nur dann, wenn eine offensichtlich fehlerhafte PIN (insbesondere wiederholt) unmittelbar hintereinander mehrfach eingegeben wird.

In einer bevorzugten Ausgestaltung ist als erste Sanktion ein Inkrementieren oder Dekrementieren des Zählerstandes eines Fehlerzählers um einen vorgegebenen ersten Wert vorgesehen.

In einer bevorzugten Ausgestaltung ist als zweite Sanktion ein Inkrementieren bzw. Dekrementieren des Zählerstandes eines Fehlerzählers um einen vorgegebenen zweiten Wert, der geringer als der erste Wert ist, vorgesehen.

In einer bevorzugten Ausgestaltung ist als zweite Sanktion kein Inkrementieren bzw. Dekrementieren des Zählerstandes eines Fehlerzählers vorgesehen.

In einer bevorzugten Ausgestaltung weist der Fehlerzähler eine Sanktionsschwelle auf, die einem vorgegebenen Zählerstand entspricht, und dass für den Fall, dass der aktuelle Zählerstand den vorgegebenen Zählerstand überschreitet, eine Sanktionsfolgeaktion, die unmittelbar auf die PIN-geschützten Vorrichtung gerichtet ist, ausgelöst wird.

In einer bevorzugten Ausgestaltung ist als Sanktionsfolgeaktion eine temporäre oder dauerhafte Sperrung, ein Einbehalten oder ein Zerstören der PIN-geschützten Einrichtung vorgesehen.

In einer bevorzugten Ausgestaltung ist als PIN-geschützte Einrichtung eine EC-Karte, Scheckkarte, Kreditkarte, Multimediakarte, SIM-Karte, Telefonkarte, Mobilfunktelefon, drahtgebundenes Telefon, Kopierer, Fax, PC-Gerät, Laptop, ein Internet- oder Online-System (z. B. Online-Banking), Gebäude-Zugangsberechtigungssystem und/oder KFZ-Sicherheitssystem vorgesehen.

In einer bevorzugten Ausgestaltung ist als PIN eine mehrstellige Zahlenkombination, Buchstabenkombination, Symbolkombination oder eine Mischung daraus vorgesehen.

In einer bevorzugten Ausgestaltung ist als PIN eine reine Zahlenkombination in dezimaler Codierung vorgesehen.

In einer bevorzugten Ausgestaltung weist die Auswerteeinrichtung einen Fehlerzähler auf, dessen Zählerstand als Folge der ersten Sanktion um den ersten vorgegebenen Wert inkrementiert bzw. dekrementiert wird, und der ausgangsseitig ein Zählerstandssignal ausgibt.

In einer bevorzugten Ausgestaltung weist die Auswerteeinrichtung eine Vergleichseinrichtung und einen Speicher, in dem eine Sanktionsschwelle abgelegt ist, auf, wobei die Vergleichseinrichtung das Zählerstandssignal aufnimmt, den aktuellen Zählerstand des Fehlerzählers mit der gespeicherten Sanktionsschwelle vergleicht und für den Fall, dass der aktuelle Zählerstand diese Sanktionsschwelle über- oder unterschreitet, ein Signal zum Auslösen einer Sanktionsfolgeaktion ausgibt.

In einer bevorzugten Ausgestaltung ist die Auswerteeinrichtung als programmgesteuerte Einrichtung, zum Beispiel als Mikrocontroller, ausgebildet.

Die Erfindung wird nachfolgend anhand der in den Figuren der Zeichnung angegebenen Ausführungsbeispiele näher erläutert. Es zeigen dabei:
- Figur 1: ein Flussdiagramm zur Erläuterung des allgemeinen erfindungsgemäßen Verfahrens zur Authentifizierung einer PIN-Eingabe;
- Figur 2A: ein Flussdiagramm zur Erläuterung eines ersten Ausführungsbeispiels des erfindungsgemäßen Verfahrens zur Authentifikation einer PIN-Eingabe;
- Figur 2B: eine beispielhafte Zustandstabelle für das in der Figur 2A dargestellte Ausführungsbeispiel;
- Figur 3A: ein Flussdiagramm zur Erläuterung eines zweiten Ausführungsbeispiels des erfindungsgemäßen Verfahrens zur Authentifikation einer PIN-Eingabe;
- Figur 3B: eine beispielhafte Zustandstabelle für das in der Figur 3A dargestellte Ausführungsbeispiel;
- Figur 4A: ein Flussdiagramm zur Erläuterung eines dritten Ausführungsbeispiels des erfindungsgemäßen Verfahrens zur Authentifikation einer PIN-Eingabe;
- Figur 4B: eine beispielhafte Zustandstabelle für das in der Figur 4A dargestellte Ausführungsbeispiel;
- Figur 5: ein Diagramm zur Veranschaulichung eines vierten Ausführungsbeispiels des erfindungsgemäßen Verfahrens zur Authentifikation einer PIN-Eingabe;
- Figur 6: zeigt anhand eines Blockschaltbildes eine erfindungsgemäße Vorrichtung zur Authentifikation von PIN Eingaben;
- Figur 7: ein Diagramm zur Veranschaulichung eines allgemein bekannten Authentifikationsverfahrens für eine PIN-Eingabe.

In den Figuren der Zeichnung sind gleiche und funktionsgleiche Elemente, Merkmale und Signale - sofern nichts Anderes ausgeführt ist - jeweils mit denselben Bezugszeichen versehen worden.

Figur 1 zeigt ein Flussdiagramm zur Erläuterung des allgemeinen erfindungsgemäßen Verfahrens zur Authentifikation einer PIN-Eingabe.

In einem ersten Verfahrensschritt S10 wird von einem Benutzer einer PIN-geschützten Vorrichtung eine PIN eingegeben.
Im nachfolgenden Verfahrensschritt S11 wird überprüft, ob diese PIN-Eingabe im Schritt S10 korrekt ist oder nicht. Ist die PIN-Eingabe korrekt, dann wird im Verfahrensschritt S12 die PIN-geschützte Vorrichtung freigegeben. Beispielsweise kann im Anschluss an eine korrekte PIN-Eingabe z. B. ein Mobilfunktelefon benutzt werden, mittels einer EC-Karte Kontoauszüge abgerufen werden, Bargeld abgehoben werden, Online-Bankgeschäfte durchgeführt werden, ein PC in Betrieb genommen werden und dergleichen. Es ergibt sich hier sicherlich noch eine Vielzahl anderer Anwendungsbeispiele von solchen PIN-geschützten Vorrichtungen, auf die hier aber nicht näher eingegangen wird.

Wird hingegen im Verfahrensschritt S11 festgestellt, dass die PIN-Eingabe nicht korrekt ist, d. h. dass es sich bei der eingegebenen PIN-Eingabe um eine falsche, also fehlerhafte PIN handelt, dann wird im nachfolgenden Verfahrensschritt S13 diese falsche PIN-Eingabe klassifiziert. Hier wird überprüft, ob es sich bei der PIN-Eingabe um eine tatsächlich fehlerhafte PIN-Eingabe handelt oder ob es um eine offensichtlich falsche PIN-Eingabe handelt.

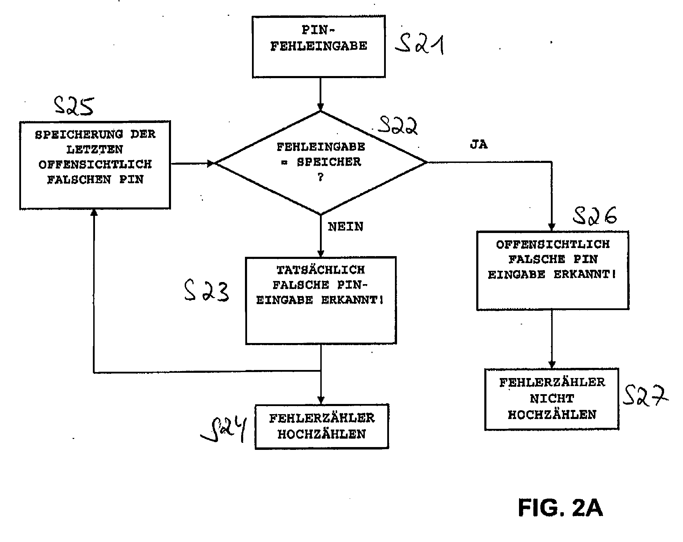

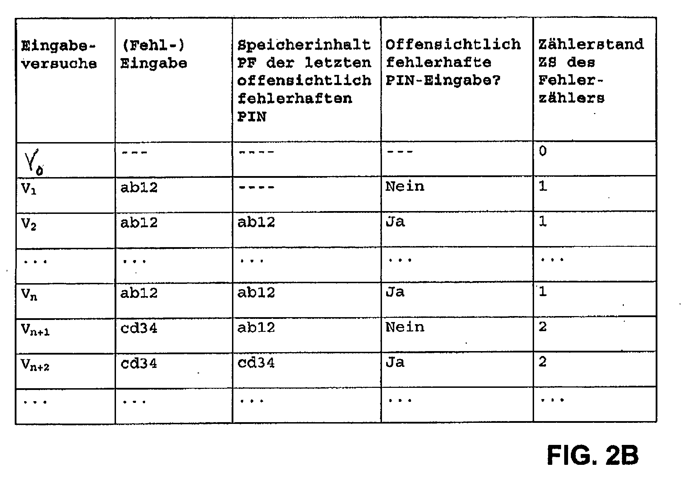

Der Unterschied zwischen einer tatsächlich fehlerhaften PIN-Eingabe und einer offensichtlich fehlerhaften PIN-Eingabe besteht darin, dass man bei einer offensichtlich fehlerhaften PIN-Eingabe nicht unbedingt auf einen Missbrauch schließen kann. Ursache dafür ist, dass z. B. die Art dieser PIN-Eingabe, die Struktur der eingegebenen PIN, eine mehrfache Wiederholung derselben PIN und damit ein mehrfacher Fehler, etc. vorhanden ist. Der Schlussfolgerung, dass es sich hier um keine tatsächliche fehlerhafte PIN-Eingabe, sondern um eine offensichtlich fehlerhafte PIN-Eingabe, die nicht notwendigerweise von einem Betrüger stammt, handeln muss, liegt die Erkenntnis zugrunde, dass ein Betrüger sicherlich nicht derart "dumme" Fehler machen würde und beispielsweise offensichtlich nicht zugelassene PINs verwenden würde oder etwa eine fehlerhafte PIN mehrfach eingegeben würde. Was unter einer offensichtlich fehlerhaften PIN-Eingabe verstanden werden kann, wird nachfolgend in Bezug auf die Ausführungsbeispiele der Figuren 2-4 noch weiter beispielhaft beschrieben.

Wird im Verfahrensschritt S13 die fehlerhafte PIN-Eingabe als tatsächlich fehlerhafte PIN-Eingabe klassifiziert, dann wird im Verfahrensschritt S14 eine erste Sanktion auf diese tatsächlich fehlerhafte PIN-Eingabe hin erzeugt. Wird hingegen im Verfahrensschritt S13 die fehlerhafte PIN-Eingabe als offensichtlich fehlerhafte PIN-Eingabe klassifiziert, dann wird im nachfolgenden Verfahrensschritt S15 eine von der ersten Sanktion unterschiedliche zweite Sanktion erzeugt.

Wesentlich ist, dass die auf die unterschiedlich klassifizierten fehlerhaften PIN-Eingaben hin erzeugten Sanktionen in den Verfahrensschritten S14, S15 einerseits voneinander verschieden sind. Andererseits ist es auch wichtig, dass die erste Sanktion als Folge der tatsächlich fehlerhaften PIN-Eingabe zumindest gravierender und somit mit schwerwiegenderen Folgen behaftet ist als die auf die offensichtlich fehlerhafte PIN-Eingabe hin vorgesehene zweite Sanktion.

Eine solche erste und/oder zweite Sanktion kann beispielsweise das Hoch- oder etwa auch Heruntersetzen des Zählerstandes eines Zählers um einen vorgegebenen Wert sein. Beispielsweise kann die erste Sanktion vorsehen, dass der Zählerstand um einen festen Wert, beispielsweise um 1, inkrementiert wird, wohingegen der Zählerstand im Falle der zweiten Sanktion nicht inkrementiert wird. Alternativ wäre auch denkbar, dass der Zählerstand im Falle der ersten Sanktion um einen größeren Wert hoch- oder heruntergesetzt wird als der Zählerstand im Falle der zweiten Sanktion.

Im Anschluss an die erste bzw. zweite Sanktion in den Schritten S14, S15 kann im Schritt S16 die PIN-Eingabe wieder freigegeben werden, sodass der berechtigte Nutzer oder auch ein anderer Nutzer im Verfahrensschritt S10 eine erneute PIN-Eingabe vornehmen kann. Das weitere Verfahren der PIN-Eingabe und deren Authentifikation beginnt dann wieder wie oben beschrieben von vorne.

In Figur 1 nicht dargestellt ist ein entsprechender Auswerteschritt, der die in den Verfahrensschritten S14, S15 akkumulierten ersten und zweiten Sanktionen mit einer vorgegebenen Schwelle vergleicht und bei Übersteigen (oder auch Unterschreiten) der vorgegebenen Sanktionsschwelle eine weitere Aktion einleitet, wie etwa das Sperren der PIN-Eingabe, das Sperren, Einbehalten oder Zerstören, einer EC-Karte und dergleichen. Diese Auswertung kann beispielsweise im Falle eines auszuwertenden Zählerstandes dazu ausgelegt sein, den jeweiligen Zählerstand mit einer einem vorgegebenen Zählerstand entsprechenden Sanktionsschwelle zu vergleichen und bei Überschreiten dieser vorgegebenen Zählerstandsschwelle die eben genannte Aktion Sperren, etc. durchführt. Nach einer korrekten PIN-Eingabe kann der Zähler wieder zurückgesetzt werden.

Das eben beschriebene erfindungsgemäße Verfahren zur Authentifizierung von PIN-Eingaben wird nachfolgend anhand der in den Figuren 2A - 4A und 2B - 4B beschriebenen Ausführungsbeispiele näher erläutert.

Figur 2A zeigt ein Flussdiagramm zur Erläuterung eines ersten Ausführungsbeispiels des erfindungsgemäßen Verfahrens zur Authentifikation einer PIN-Eingabe. Figur 2B zeigt das dazugehörige Zustandsdiagramm.

Es sei angenommen, dass es sich bei der PIN-Eingabe bereits um eine fehlerhafte PIN-Eingabe handelt, so dass im Verfahrensschritt S21 eine PIN-Fehleingabe vorliegt. Mit den nachfolgenden Verfahrensschritten wird nun klassifiziert, ob es sich bei dieser PIN-Fehleingabe um eine tatsächlich fehlerhafte PIN-Eingabe oder um eine offensichtlich fehlerhafte PIN-Eingabe handelt. Hierzu wird im Verfahrensschritt S22 überprüft, ob die PIN-Fehleingabe mit einer bereits früher vorhandenen PIN-Fehleingabe, die z. B. in einem eigens dafür vorgesehenen Speicher abgelegt ist, übereinstimmt, indem diese PIN-Fehleingabe mit gespeicherten, früheren PIN-Fehleingaben verglichen wird.

Da zu Beginn des erfindungsgemäßen Authentifikationsverfahrens keinerlei PIN-Eingaben und somit auch keine PIN-Fehleingaben vorliegen, ist der Speicher typischerweise zunächst zurückgesetzt, d. h. im Speicher sind zunächst keine PIN-Fehleingaben gespeichert. Aus diesem Grunde wird die PIN-Fehleingabe im Verfahrensschritt S23 zunächst als tatsächlich fehlerhafte PIN-Eingabe klassifiziert. In der Folge wird im Verfahrensschritt S24 der Zählerstand eines Fehlerzählers inkrementiert, beispielsweise um den Wert "1" hochgezählt. Gleichzeitig wird diese PIN-Fehleingabe, die als tatsächlich fehlerhafte PIN-Eingabe klassifiziert wurde, im Verfahrensschritt S25 im Speicher hinterlegt. Würde bei einer nachfolgenden PIN-Eingabe dieselbe PIN-Fehleingabe (also derselbe Wert) im Schritt S21 vorgenommen, dann wird der Wert dieser PIN-Fehleingabe im Verfahrensschritt S22 mit dem gespeicherten Wert der vorangegangenen PIN-Fehleingabe verglichen. Da dann die im Schritt S21 eingegebene PIN-Fehleingabe mit der gespeicherten PIN-Fehleingabe aus dem Schritt S25 übereinstimmt, wird diese eingegebene PIN-Fehleingabe S21 im Schritt S26 somit als offensichtlich fehlerhafte PIN-Eingabe erkannt. In der Folge wird der Wert des Fehlerzählers nun nicht inkrementiert, so dass diese Fehleingabe keine Sanktion (Hochsetzen des Fehlerzählers) zur Folge hat.

Bei diesem erfindungsgemäßen Verfahren wird also eine erstmalige PIN-Fehleingabe mit einer Sanktion, wie etwa dem Hochsetzen oder Inkrementieren des Fehlerzählers belegt, wohingegen eine nochmalige Eingabe derselben fehlerhaften PIN keine weitere Sanktion und somit eine geringere Sanktion zur Folge hat.

Es ist zu betonen, dass das erfindungsgemäße Verfahren nicht auf die oben beschriebene Reihenfolge der einzelnen Verfahrensschritte S21 - S27 beschränkt ist. Beispielsweise können die Schritte S26 und S27 bzw. S23 - S24 auch in einer anderen Reihenfolge oder gleichzeitig geschehen.

Fig. 2B zeigt beispielsweise eine Zustandstabelle für das in Fig. 2A dargestellte Ausführungsbeispiel des erfindungsgemäßen Verfahrens zur PIN-Überprüfung bei gleichen und bei verschiedenen PIN-Fehleingaben.

Der Versuch V₀ stellt den Ausgangszustand dar, bei dem der Anfangswert PF im Speicher für die letzte, nicht offensichtlich falsche PIN und der Zählerstand ZS des Fehlerzählers z.B. jeweils auf "0000" bzw. "0" zurückgesetzt sind.

Es sei angenommen, dass beim ersten Versuch V₁ eine PIN-Fehleingabe "ab12" eingegeben wird. Nach einem Vergleich der Fehleingabe "ab12" mit dem Anfangswert "0000" im Speicher für die letzte nicht offensichtlich falsche PIN wird aufgrund des Unterschieds dieser beiden Werte eine tatsächlich falsche PIN-Eingabe erkannt. Daher wird der Zählerstand des Fehlerzählers erhöht, beispielsweise um "1". Zusätzlich wird die erkannte tatsächlich falsche PIN-Eingabe, nämlich "ab12", im Speicher abgelegt.

Beim nächsten (zweiten) Versuch V₂ wird beispielsweise erneut die PIN-Fehleingabe "ab12" eingegeben. Nach dem Vergleich der PIN-Fehleingabe "ab12" des Versuches V₂ mit dem aktuellen Wert "ab12" im Speicher für die letzte tatsächlich falsche PIN-Eingabe wird aufgrund der Übereinstimmung der beiden Werte auf eine offensichtlich falsche PIN-Eingabe erkannt, so dass der Zählerstand des Fehlerzählers nun nicht hoch gezählt wird und somit bei "1" bleibt.

Dieselbe PIN-Fehleingabe "ab12" kann beliebig oft hintereinander (z.B. bis zum Versuch Vₙ) wiederholt werden, ohne dass der Speicher für die letzte tatsächlich falsche PIN-Eingabe und der Fehlerzähler sich verändern. Diese wiederholten PIN-Fehleingaben werden also nicht mehr sanktioniert.

Beim Versuch Vₙ₊₁ wird beispielsweise eine weitere PIN-Fehleingabe "cd34" eingegeben. Diese Fehleingabe "cd34" wird nun wieder mit dem im Versuch Vₙ im Speicher abgelegten Wert "ab12" verglichen. Aufgrund des Unterschieds dieser beiden Werten wird eine tatsächlich falsche PIN-Eingabe erkannt. Das führt zur Erhöhung des Zählerstands des Fehlerzählers, beispielsweise wieder um "1" auf "2". Ferner wird diese neue tatsächlich fehlerhafte PIN-Eingabe "cd34" im Speicher gespeichert.

Beim nächsten Versuch Vₙ₊₂ wird beispielsweise erneut wieder dieselbe Fehleingabe "cd34" eingegeben. Nach dem Vergleich der Fehleingabe "cd34" mit dem Speicherstand "cd34" wird aufgrund deren Übereinstimmung auf eine offensichtlich falsche PIN-Eingabe erkannt, so dass der Zählerstand des Fehlerzählers bei "2" bleibt. Es zeigt sich, dass man nun noch beliebig oft dieselbe fehlerhafte PIN-Eingabe tätigen kann, ohne dass dies sanktioniert wird.

Weitere Versuche erfolgen nach oben beschriebenen Verfahren. Ein Rücksetzen des Zählerstands des Fehlerzählers erfolgt z. B. bei einer Eingabe der richtigen PIN.

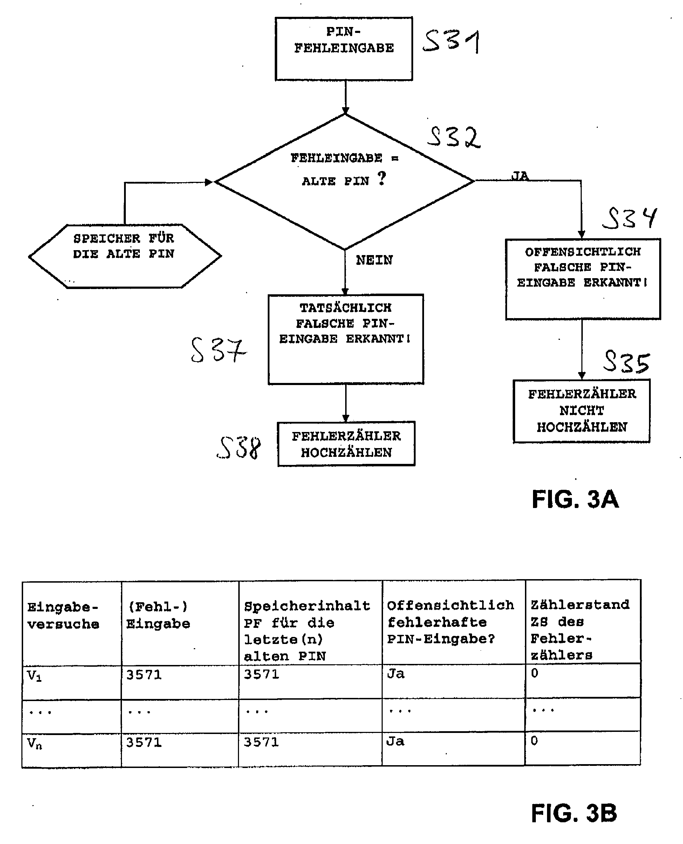

Fig. 3A zeigt ein Flussdiagram für ein weiteres Ausführungsbeispiel des erfindungsgemäßen Verfahrens zur PIN/Passwort Überprüfung bei Fehleingaben von einer alten PIN/Passwort;

Es sei angenommen, dass mit dem Schritt S31 eine falsche PIN-Eingabe getätigt wird. Diese PIN-Fehleingabe lässt sich im Schritt S32 mit einer in einem Speicher abgelegten PIN für das selbe System vergleichen. Falls die PIN-Fehleingabe aus dem Schritt S31 mit der gespeicherten PIN übereinstimmt, dann wird hier davon ausgegangen, dass es sich bei der PIN-Fehleingabe um eine offensichtlich fehlerhafte PIN-Eingabe handelt (Schritt S34). In der Folge wird der Fehlerzähler im Schritt S35 nicht inkrementiert, d. h. diese PIN-Fehleingabe hat keine unmittelbare Sanktion zur Folge.

Falls die PIN-Fehleingabe in Schritt S31 nicht identisch mit der alten, gespeicherten PIN ist, wird im Schritt S36 diese PIN-Fehleingabe als offensichtlich fehlerhafte PIN-Eingabe erkannt. In der Folge führt dies im Schritt S37 als unmittelbare Sanktion zu einem Inkrementieren des Fehlerzählers.

Fig. 3B zeigt eine beispielhafte Zustandstabelle für das in der Fig. 3A dargestellte Ausführungsbeispiel. Gemäß diesem Ausführungsbeispiel sei angenommen, dass eine alte PIN, die im Speicher des jeweiligen Anwendungssystems abgelegt ist, den Wert "3571" hat. Ferner sei angenommen, dass im Ruhezustand, d. h. als Ausgangswert, der Fehlerzähler auf "0" zurückgesetzt ist. Bei dem ersten Eingabeversuch V1 wird z. B. eine Fehleingabe "3571", die der alten, im Speicher abgelegten PIN entspricht, eingegeben. Dies wird durch eine eigens dafür vorgesehene Auswerteschaltung erkannt, die die eingegebene PIN-Eingabe mit der abgespeicherten, also alten PIN vergleicht, erkannt. Diese Auswerteschaltung erkennt somit die eingegebene PIN-Eingabe als offensichtlich fehlerhafte PIN-Eingabe, was dazu führt, dass der Zählerstand ZS des Feherzählers nicht inkrementiert wird und somit unverändert bleibt. Es erfolgt hier also keine Sanktionierung der PIN-Fehleingabe, da diese PIN-Fehleingabe als offensichtlich fehlerhafte PIN-Eingabe erkannt wird.

Diese PIN-Fehleingabe kann in nachfolgenden Eingabeversuchen V2 - VN noch beliebig häufig wiederholt werden, ohne dass dies durch Inkrementieren des Zählerstandes des Fehlerzählers sanktioniert wird. Hingegen erfolgt bei von der alten, abgespeicherten PIN abweichenden PIN-Fehleingaben die Überprüfung einer offensichtlich fehlerhaften PIN-Eingabe nach dem oben anhand von Fig. 2A gezeigten Schema.

In dem Beispiel in Fig. 3B ist lediglich eine einzige alte PIN im Speicher PF abgelegt, beispielsweise die vor der aktuellen PIN zuletzt verwendete PIN. Zusätzlich kann allerdings auch vorgesehen sein, dass nicht nur eine einzige alte PIN, beispielsweise die zuletzt verwendete alte PIN, abgespeichert wird, sondern dass sämtliche oder zumindest eine größere Anzahl alter PINs im Speicher abgelegt sind.

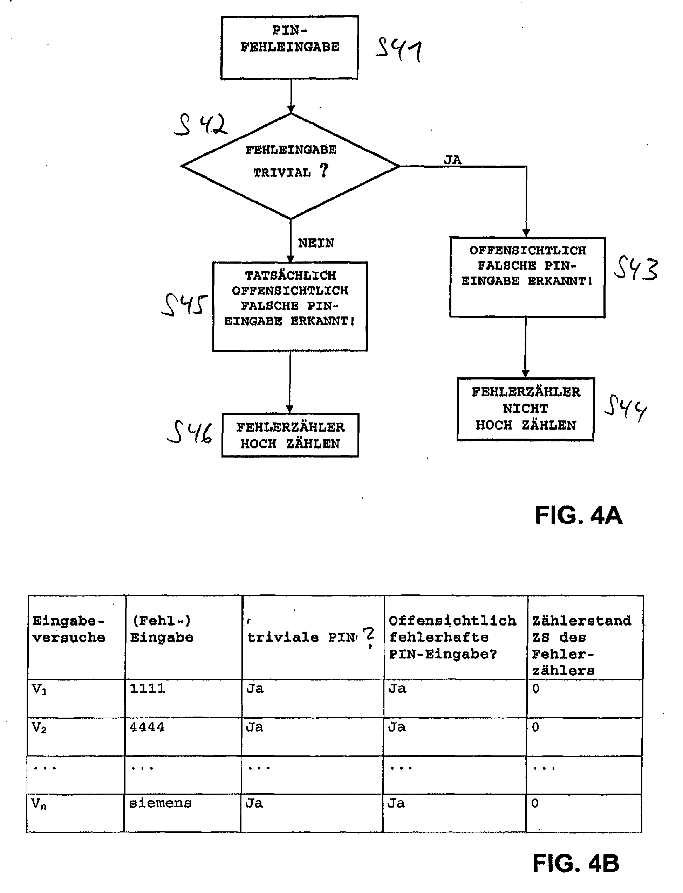

Fig. 4A zeigt ein Flussdiagramm zur Erläuterung eines dritten Ausführungsbeispiels des erfindungsgemäßen Verfahrens zur Authentifikation von so genannten trivialen PIN-Eingaben.

Es sei angenommen, dass im Verfahrensschritt S41 erneut eine PIN-Fehleingabe erfolgt. Diese PIN-Fehleingabe wird im Schritt S42 dahingehend überprüft, ob diese eingegebene PIN eine so genannte triviale PIN ist, welche z. B. von dem Anwendungssystem der PIN geschützten Vorrichtung nicht zugelassen ist. Diese trivialen PINs können von dem jeweils verwendeten Anwendungssystem unterschiedlich definiert sein. Falls die PIN-Fehleingabe im Verfahrensschritt S41 einer solchen trivialen PIN dieses Anwendungssystems entspricht, dann wird dies im Schritt S43 als eine offensichtlich fehlerhafte PIN-Eingabe definiert. In der Folge wird im Schritt S44 der Fehlerzähler nicht um "1" inkrementiert, so dass hier diese PIN-Fehleingabe aus dem Schritt S41 nicht sanktioniert wird.

Falls die PIN-Fehleingabe aus dem Schritt S41 mit keiner, von dem Anwendungssystem definierten trivialen PIN übereinstimmt, dann wird diese PIN-Fehleingabe als eine tatsächlich fehlerhafte PIN-Eingabe definiert. Diese tatsächlich fehlerhafte PIN-Eingabe führt somit unmittelbar zu einem Inkrementieren des Fehlerzählers im Schritt 46 und somit zu einer Sanktion.

Fig. 4B zeigt eine beispielhafte Zustandstabelle für das in der Fig. 4A dargestellte dritte Ausführungsbeispiel für die Überprüfung einer PIN-Fehleingabe mit so genannten trivialen PINs. In diesem Ausführungsbeispiel sei angenommen, dass der Fehlerzähler anfangs wiederum auf "0" zurückgesetzt ist.

Bei einem ersten Eingabeversuch V1 wird eine PIN-Eingabe mit dem Wert "1111" eingegeben. Dieser Wert "1111" wird von dem vorliegenden Anwendungssystem als trivialer Wert angesehen und somit von einer PIN-Eingabe ausgeschlossen. Durch Vergleich dieser, bei dem ersten Versuch V1 eingegebenen PIN-Eingabe "1111" mit den von dem Anwendungssystem vorgegebenen trivialen PINs erkennt eine Auswerteschaltung, dass diese PIN-Eingabe mit einer der nicht freigegebenen trivialen PINs übereinstimmt, so dass diese PIN-Eingabe als PIN-Fehleingabe interpretiert wird. In der Folge wird der Zählerstand des Fehlerzählers nicht inkrementiert und bleibt somit bei seinem ursprünglichen Wert "0".

Mit dem zweiten Eingabeversuch V2 wird eine zweite PIN mit dem Wert "4444" eingegeben. Diese zweite eingegebene PIN ist zwar von der im Eingabeversuch V1 eingegebenen PIN unterschiedlich, jedoch ist auch diese, zweite PIN-Eingabe eine so genannte triviale PIN, die von dem Anwendungssystem nicht freigegeben ist. In der Folge wird diese PIN-Eingabe als offensichtlich fehlerhafte PIN-Eingabe interpretiert, wodurch der Fehlerzähler auch hier nicht inkrementiert wird und somit bei dem Wert "0" stehen bleibt.

Neben dieser, vom Anwendungssystem nicht freigegebenen, trivialen PIN "1111" können darüber hinaus auch noch weitere triviale PINs vom Anwendungssystem nicht freigegeben werden, so z. B. die Werte "2222", "3333", etc. oder "1234", "2345", etc.

Statt der Eingabe von Zahlen-PINs kann das System zusätzlich oder alternativ auch vorsehen, dass Passwörter mit Buchstaben als PINs verwendet werden, die ausschließlich oder in Kombination mit Ziffern oder sonstigen Symbolen verwendet werden. Auch hier können triviale Passwörter, wie z. B. bekannte Wörter (z. B. Siemens, etc.), ebenfalls ausgeschlossen werden. Dies ist in dem Ausführungsbeispiel in Fig. 4B beispielhaft angedeutet, bei dem im Eingabeversuch VN als PIN der Begriff "siemens" eingegeben wird. Dies wird als triviales Passwort und somit als offensichtlich fehlerhafte PIN-Eingabe interpretiert, mit der Folge, dass der Zählerstand des Fehlerzählers nicht inkrementiert wird.

Bei PIN-Eingaben von nicht-trivialen PINs bzw. Passwörtern erfolgt die Überprüfung dieser PIN-Eingabe analog zu dem anhand der Figuren 2A und 3A gezeigten Schema.

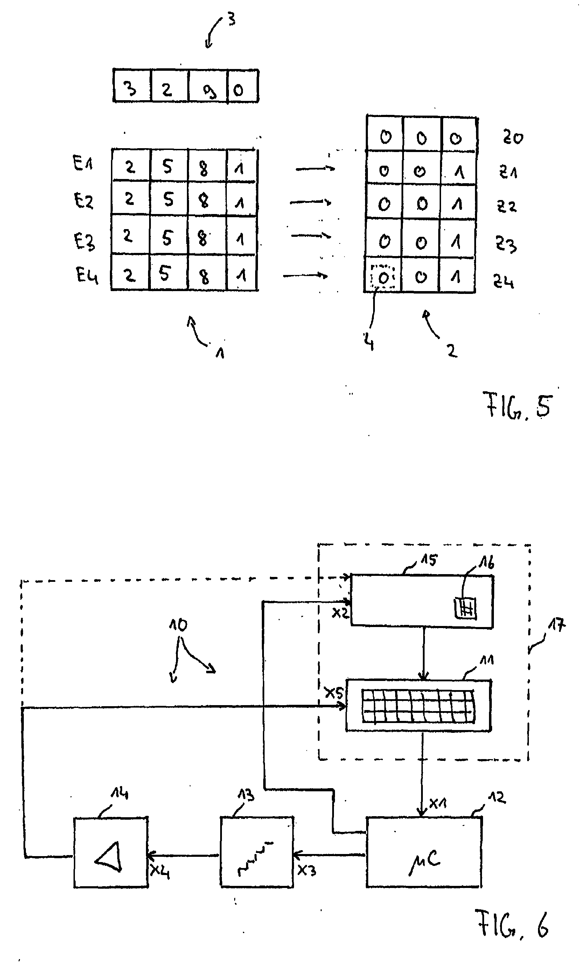

Figur 5 zeigt ein Diagramm zur Veranschaulichung eines vierten Ausführungsbeispiels zur Erläuterung des erfindungsgemäßen Verfahrens zur Authentifikation einer PIN-Eingabe. In diesem vierten Ausführungsbeispiel ist das eingangs, anhand der Fig. 7 erläuterte bekannte Verfahren zur Authentifikation einer PIN-Eingabe und hier insbesondere einer PIN-Fehleingabe aufgegriffen worden. Auch hier ist zunächst der Zählerstand 2 zurückgesetzt, so dass anfänglich ein Zählerstand Z0 = "000" vorliegt. Statt der korrekten PIN 3 "3290" wird in der ersten Eingabe E1 eine fehlerhafte PIN-Eingabe getätigt, indem die Ziffernfolge "2581" eingegeben wird. Dies wird durch Vergleich mit der korrekten PIN "3290" als tatsächlich fehlerhafte PIN-Eingabe klassifiziert, wodurch als unmittelbare Sanktion der Zählerstand 2 um "1" inkrementiert wird, so dass der Zählerstand nunmehr Z1 = 001 beträgt. Anschließend wird in den Eingaben E2 - E4 jeweils dieselbe PIN-Eingabe "2581" getätigt. Dieses wiederholte Eingeben derselben fehlerhaften PIN-Eingabe aus dem Verfahrensschritt E1 wird als offensichtlich fehlerhafte PIN-Eingabe interpretiert, mit der Folge, dass für diese Eingaben E2 - E4 der Zählerstand 2 nicht um "1" inkrementiert wird. Somit bleibt der Zählerstand 2 bei dem Wert "001" stehen. Das MSB-Bit 4 ist hier somit - im Unterschied zu dem bekannten Verfahren zur Authentifikation einer PIN-Eingabe aus Fig. 7 - nach wie vor bei dem Wert "0", so dass der Benutzer nach wie vor eine weitere PIN-Eingabe zur Authentifikation seiner PIN-geschützten Vorrichtung tätigen kann.

Figur 6 zeigt ein Blockschaltbild zur Erläuterung einer erfindungsgemäßen Vorrichtung zur Authentifikation einer PIN-Eingabe. In Figur 6 ist diese Vorrichtung mit Bezugszeichen 10 bezeichnet. Diese Vorrichtung 10 umfasst eine Tastatur 11, eine Auswerteeinrichtung 12, einen Zähler 13 und eine Vergleichseinrichtung 14. Figur 5 zeigt ferner eine PIN-geschützte Vorrichtung 15. Es sei angenommen, dass die PIN-geschützte Vorrichtung 15 mittels einer korrekten PIN-Eingabe freigeben werden kann. Diese PIN-geschützte Vorrichtung 15 sei im vorliegenden Ausführungsbeispiel eine EC-Karte 15 mit einem entsprechenden Daten-Chip 16, in dem eine entsprechende korrekte PIN hinterlegt ist. Wird diese EC-Karte beispielsweise in einen Geldautomaten 17 eingeführt, kann über die Tastatur 11 des Geldautomaten 17 von dem Benutzer der EC-Karte 15 eine PIN eingegeben werden. Abhängig von dieser PIN-Eingabe erzeugt die Tastatur 11 ein Signal X1, welches eine Information über die über die Tastatur 11 eingegebene PIN enthält. Diese beispielsweise binär kodierte PIN-Eingabe bzw. das Signal X1 wird in der Auswerteeinrichtung 12 überprüft. Dabei wird einerseits überprüft, ob die PIN-Eingabe eine fehlerhafte PIN-Eingabe ist oder ob es sich hier um eine korrekte PIN-Eingabe handelt. Handelt es sich um eine korrekte PIN-Eingabe, dann erzeugt die Auswerteeinrichtung 12 direkt ein Freigabesignal X2, welches dem Geldautomaten 17 signalisiert, dass der Nutzer ein berichtigter Nutzer ist. In der Folge kann die von dem Nutzer gewünschte Aktion durchgeführt werden. Eine solche Aktion kann beispielsweise das Abrufen eines Kontoauszuges oder eine Geldabhebung sein.

Im anderen Fall, d. h. bei erkannter fehlerhafter PIN-Eingabe, führt die Auswerteeinrichtung 12 zusätzlich eine Klassifikation der fehlerhaften PIN-Eingabe durch. Diese Klassifikation erfolgt wie oben anhand der Fig. 1 - 4 beschrieben, also dahingehend, ob es sich bei dieser PIN-Eingabe um eine offensichtlich falsche PIN-Eingabe oder um eine tatsächlich falsche PIN-Eingabe handelt. Als Folge dieser Klassifikation erzeugt die Auswerteeinrichtung 12 ein Steuersignal X3, welches von dem nachgeschalteten Zähler 13 aufgenommen wird. Für den Fall, dass die fehlerhafte PIN-Eingabe eine tatsächlich fehlerhafte PIN-Eingabe ist, wird der Zählerstand des Aufwärts-Zählers 13 um "1" inkrementiert. Andernfalls, d. h. im Falle einer offensichtlich falschen PIN-Eingabe, wird der Zählerstand des Zählers 13 nicht inkrementiert. Der Zählerstand des Zählers 13 wird als Zählerstandssignal X4 einer nachgeschalteten Vergleichereinrichtung 14 zugeführt. Diese Vergleichereinrichtung 14 überprüft z. B. bei jeder PIN-Eingabe, ob der Zählerstand des Zählers 13 eine vorgebene Zählerstandsschwelle überschritten hat oder nicht. Überschreitet der Zählerstand des Zählers 13 durch fortwährendes Inkrementieren (im Falle einer fortwährenden fehlerhaften PIN-Eingabe) die vorgegebene Zählerstandsschwelle, dann erzeugt die Vergleichereinrichtung 14 ausgangsseitig ein Sperrsignal X5. Mittels dieses Sperrsignals X5 kann beispielsweise die Tastatur 11 des Geldautomaten gesperrt werden, sodass eine weitere PIN-Eingabe nicht mehr möglich ist. Zusätzlich oder alternativ kann über dieses Sperrsignal X5 auch die EC-Karte 15 direkt sanktioniert wird (gestrichelter Pfeil). Dies kann beispielsweise darin bestehen, dass die EC-Karte 15 im Geldautomaten einbehalten wird. Alternativ wäre auch denkbar, dass die EC-Karte 15 gesperrt wird, was in dem Daten-Chip 16 entsprechend hinterlegt wird. Diese EC-Karte 15 ist für den Nutzer dann so lange nicht mehr nutzbar, bis sie von einer eigens dafür vorgesehenen Stelle, beispielsweise dem entsprechenden Bankhaus, wieder entsperrt wird.

In einer besonders bevorzugten Implementierung des erfindungsgemäßen Authentifizierungsverfahrens wird beispielsweise nur die letzte oder mehrere zuletzt falsch eingegebenen PINs abgespeichert. Es werden also nicht die Anzahl aller bisher falsch eingegebenen PINs gespeichert. Folglich wird hier ein Inkrementieren des Fehlerzählers nur dann vermieden, wenn z. B. eine falsche PIN unmittelbar hintereinander zwei oder mehrfach eingegeben wird.

Es sei zu betonen, dass in Fig. 6 lediglich eine beispielhafte PIN geschützte Vorrichtung zur Authentifikation einer PIN-Eingabe dargestellt ist, die selbstverständlich in beliebiger Art und Weise modifizierbar und/oder abänderbar ist. So ließe sich beispielsweise die Tastatur auch durch eine andere Eingabevorrichtung, wie z. B. eine einzelne Taste oder einen Schalter realisieren. Die Auswerteeinrichtung 12 sei im vorliegenden Ausführungsbeispiel als Mikrokontroller realisiert. Ferner ist diese Auswerteeinrichtung 12 im gezeigten Beispiel in Fig. 6 von dem Zähler 13 und der Vergleichseinrichtung 14 getrennt implementiert. Es versteht sich von selbst, dass diese Vorrichtungen 12, 13, 14 jeweils Bestandteil einer einzigen Vorrichtung, die z. B. in der Funktion eines Mikrocontrollers implementiert ist, sein kann. Statt der Verwendung eines Mikrocontrollers für die Auswerteeinrichtung 12 und/oder für den Zähler 13 und die Vergleichseinrichtung 14 kann hier auf eine beliebig andere programmgesteuerte Einrichtung, wie z. B. ein Mikroprozessor oder etwa auch eine programmgesteuerte Logikschaltung, wie z. B. eine PLD oder FPGA, sein.

Des Weiteren können verschiedene hier vorgestellte Schritte des Verfahrens auch in unterschiedlichen Vorrichtungen implementiert werden. Beispielswiese kann der Vergleich der eingegebenen PIN mit der korrekten PIN und die Behandlung des Fehlerzählers in einer ersten Vorrichtung erfolgen, während das Erkennen und Behandeln von offensichtlich falschen PIN Eingaben in einer zweiten Vorrichtung erfolgt.

Gemäß einem weiteren Ausführungsbeispiel wird eine offensichtlicht falsche PIN nicht an die erste Vorrichtung zur Verarbeitung gegeben, sondern ausschließlich von der zweiten Vorrichtung behandelt. Dieses Ausführungsbeispiel hat den Vorteil, dass die erste Vorrichtung eine bekannte Vorrichtung sein kann und für den Einsatz des erfindungsgemäßen Verfahrens nicht eigens dafür modifiziert werden muss. Die Erfindung kann dann z. B. ausschließlich in der zweiten Vorrichtung implementiert werden. Dies ist dann vorteilhaft, wenn eine Implementierung in der ersten Vorrichtung schwierig oder unpraktikabel ist beispielsweise weil die erste Vorrichtung bewusst so gestaltet ist, dass Änderungen oder Manipulationen erschwert sind, um so zu verhindern, dass sicherheitsrelevante Funktionen kompromittiert werden.

Beispielsweise kann es sich bei der ersten Vorrichtung um eine SIM-Karte handeln, die sicherheitsrelevante Informationen enthält, beispielsweise eine SIM-Karte für den Zugang in ein Mobilfunknetz oder eine Chip-Karte, die in Bankautomaten verwendet wird. Die Implementierung der Erfindung kann dann in dem Mobilfunkgerät vorgenommen werden, in dem die SIM-Karte verwendet wird, oder in dem Bankautomaten. Eine Implementierung in einem Bankautomaten ist vorteilhafterweise einfach möglich, da der Bankautomat typischerweise online mit einem Zentralrechner der Bank verbunden ist und auf diese Weise aufwandsgünstig eine neue erfindungsgemäße Softwareversion geladen werden kann.

Ein weiterer Vorteil ist, dass nach Implementierung der Erfindung in der zweiten Vorrichtung der erfindungsgemäße Vorteil beim Einsatz mit allen ersten Vorrichtungen, also allen SIM-Karten oder Bankkarten, gegeben ist. Häufig gibt es eine größere Anzahl erster Vorrichtungen als zweite Vorrichtungen, beispielsweise gibt es eine größere Anzahl Geld-Karten als Geldautomaten. Somit ist es aufwandsgünstiger, z. B. nur die zweiten Vorrichtungen zu modifizieren. Es sei hier auch darauf hingewiesen, dass dann auch in den Ablaufdiagrammen die Überprüfung der PIN auf Korrektheit erst nach der Überprüfung, ob die PIN offensichtlich falsch ist, durchgeführt wird.

Obgleich die vorliegende Erfindung vorstehend anhand mehrerer Ausführungsbeispiele beschrieben wurde, sei sie nicht darauf beschränkt, sondern lässt sich auf beliebige Art und Weise modifizieren.

So ist die Erfindung nicht ausschließlich auf den Einsatz für EC- oder Scheckkarten bei Geldautomaten beschränkt, sondern lässt sich auch auf andere PIN-geschützte Karten, wie z. B. Multimediakarten, SIM-Karten, Kreditkarten und dergleichen anwenden. Auch ist die Erfindung nicht notwendigerweise auf die Verwendung bei Geldautomaten beschränkt. Vielmehr lässt sich die Erfindung sehr vorteilhaft auch bei Mobilfunktelefonen, drahtgebundenen Telefonen, Kopierern, Fax, PC-Geräten, portable Laptops und dergleichen, die PINgeschützt, sind erweitern. Denkbar wäre selbstverständlich auch eine Anwendung bei der Zugangs- oder Fahrberechtigungsanfrage in einem Kraftfahrzeug oder etwa auch im privaten Bereich im Falle einer PIN-geschützten Zugangsanfrage einer Haustür, einer Garage und dergleichen. Anhand der soeben vorgenommenen beispielhaften Aufzählung der verschiedenen Anwendungsmöglichkeiten dürfte schon ersichtlich sein, dass darüber hinaus auch eine beliebige Vielzahl weiterer Anwendungsvarianten für die Authentifizierung einer PIN-Eingabe möglich sind.

In den vorliegenden Ausführungsbeispielen wurde als erste Sanktion ein Inkrementieren des Zählerstandes und als zweite Sanktion keine Inkrementierung vorgenommen. Statt dem Inkrementieren wäre auch denkbar, den Zählerstand zu Dekrementieren. Denkbar wäre hier selbstverständlich auch eine beliebige Variation dieser Sanktionen, beispielsweise dass für die erste Sanktion eine größere Inkrementierung als für die zweite Sanktion vorgesehen ist. Denkbar wäre als erste Sanktion z. B. auch eine unmittelbare Sperrung, wohingegen für die zweite Sanktion beispielsweise lediglich eine temporäre Sperrung vorgesehen ist.

Im Falle des Ausführungsbeispiels in den Figuren 4A und 4B wurde jeweils eine vorgegebene Anzahl an trivialen PIN-Eingaben abgespeichert. Die Anzahl und der Umfang dieser trivialen PIN-Eingabe lässt sich selbstverständlich benutzerdefiniert mehr oder weniger stark variieren, je nachdem, welche Sicherheit durch das Authentifikationsverfahren gewünscht ist oder welche trivialen PINs man grundsätzlich von der Authentifikation ausnehmen möchte.

Das Gleiche gilt für die Speicherung alter PINs. Hier kann vorgesehen sein, dass lediglich die letzte alte PIN abgespeichert wird. Zusätzlich oder alternativ wäre auch denkbar, dass sämtliche oder zumindest eine bestimmte Anzahl alter PINs in einem eigens dafür vorgesehenen Speicher hinterlegt sind. Denkbar wäre auch, die Speicherung einer PIN mit einer Zeitdauer, nach der die gespeicherten PINs gelöscht werden, zu verknüpfen.

Ferner sei darauf hingewiesen, dass als PIN auch ein Passwort oder dergleichen verstanden werden kann. Im vorliegenden Ausführungsbeispiel wurde als PIN meist eine dezimale Zahl verwendet. Denkbar wäre hier auch eine andere PIN-Kodierung, beispielsweise eine binär-kodierte, thermometer-kodierte PIN oder auch etwa eine PIN, bei der z. B. neben binären oder dezimalen Zahlen Buchstabencodes, bei denen z. B. auch die Groß- oder Kleinschreibung unterschieden wird, oder sonstige Symbole, wie z. B. ".", ",", "-" oder andere Symbole mit einbezogen werden.

### Bezugszeichenliste

- 1: Tastatureingabe zur Eingabe einer PIN
- 2: Zählerstand
- 3: korrekte PIN
- 4: MSB-Bit des Zählerstands
- E1 - E4: Eingaben
- Z0 - Z4: Zählerstände
- 10: Vorrichtung zur Authentifikation einer PIN-Eingabe
- 11: Tastatur
- 12: Auswerteeinrichtung
- 13: (Aufwärts-)Zähler
- 14: Vergleichseinrichtung
- 15: PIN-geschützte Einrichtung
- 16: Datenchip
- 17: Geldautomat
- X1 - X5: Signale
- S10 - S46: Verfahrensschritte
- V0 - V4: Versuche für eine PIN-Eingabe
- PF: im Speicher abgelegte PIN-Fehleingabe
- ZS: Zählerstand

## Patentansprüche

1. Verfahren zur Authentifikation PIN-bezogener Eingaben für eine PIN-geschützte Einrichtung (15), mit den Schritten:
(a) Überprüfen einer PIN-Eingabe dahingehend, ob es sich bei der eingegebenen PIN um eine fehlerhafte oder um eine korrekte PN handelt;
(b) Klassifikation der überprüften PIN-Eingabe, sofern die überprüfte PIN fehlerhaft ist.

2. Verfahren nach Anspruch 1,
**dadurch gekennzeichnet,**
**dass** im Verfahrensschritt (a) die eingegebene PIN mit der korrekten PIN, welche zur Authentifizierung und damit zur Freigabe der PIN-geschützten Einrichtung (15) vorgesehen ist, verglichen wird.

3. Verfahren nach einem der vorstehenden Ansprüche,
**dadurch gekennzeichnet,**
**dass** eine fehlerhafte PIN vorliegt, wenn die eingegebene PIN sich in mindestens einem Eingabesymbol von der korrekten PIN unterscheidet.

4. Verfahren nach einem der vorstehenden Ansprüche,
**dadurch gekennzeichnet,**
**dass** im Verfahrensschritt (b) die überprüfte fehlerhafte PIN dahingehend klassifiziert wird, ob es sich hier um eine offensichtlich fehlerhafte PIN oder um eine tatsächlich fehlerhafte PIN handelt.

5. Verfahren nach Anspruch 4,
**dadurch gekennzeichnet,**
**dass** eine wiederholt eingegebene fehlerhafte PIN als offensichtlich fehlerhafte PIN klassifiziert wird.

6. Verfahren nach einem der Ansprüche 4 oder 5,
**dadurch gekennzeichnet,**
**dass** eine alte PIN derselben PIN-geschützten Vorrichtung, die nicht mehr gültig ist, als offensichtlich fehlerhafte PIN klassifiziert wird.

7. Verfahren nach einem der Ansprüche 4 bis 6,
**dadurch gekennzeichnet,**
**dass** eine triviale PIN, die von einem Authentifikationssystem der PIN-geschützten Einrichtung (15) als nicht erlaubt vorgegeben wird, als offensichtlich fehlerhafte PIN klassifiziert wird.

8. Verfahren nach Anspruch 7,
**dadurch gekennzeichnet,**
**dass** als triviale PIN eine solche PIN zu verstehen ist, die aufgrund ihres Bedeutungsinhalts und/oder ihrer Symbolfolge zur Erhöhung der Sicherheit der PIN-geschützten Einrichtung (15) von der PIN-Authentifikation ausgenommen wird.

9. Verfahren nach einem der Ansprüche 7 oder 8,
**dadurch gekennzeichnet,**
**dass** triviale PINs solche PINs sind, die gängige Wörter, Firmennamen, Namen, feststehende Begriffe, gängige Ziffernfolgen und/oder gängige Symbolfolgen enthalten.

10. Verfahren nach einem der Ansprüche 4 bis 9,
**dadurch gekennzeichnet,**
**dass** eine fehlerhafte PIN, die durch das Authentifikationssystem vorgegebene Eigenschaften, beispielsweise eine Mindestanzahl von Ziffern, Buchstaben, Großbuchstaben, Kleinbuchstaben und/oder Sonderzeichen, nicht aufweist, als offensichtlich fehlerhafte PIN klassifiziert wird.

11. Verfahren nach einem der Ansprüche 4 bis 10,
**dadurch gekennzeichnet,**
**dass** eine fehlerhafte PIN, eine alte PIN und/oder eine triviale PIN in einem Speicher abgelegt wird/werden.

12. Verfahren nach einem der vorstehenden Ansprüche,
**gekennzeichnet durch**
den weiteren Schritt:
(c) Auslösen einer ersten Sanktion, sofern die PIN-Eingabe eine tatsächlich fehlerhafte PIN ist, und Auslösen einer von der ersten Sanktion verschiedenen zweiten Sanktion, sofern die PIN-Eingabe eine offensichtlich fehlerhafte PIN ist.

13. Verfahren nach Anspruch 12,
**dadurch gekennzeichnet,**
**dass** die zweite Sanktion geringer, also mit geringeren Folgen behaftet ist als die erste Sanktion.

14. Verfahren nach einem der Ansprüche 12 oder 13,
**dadurch gekennzeichnet,**
**dass** im Falle einer erstmals erkannten fehlerhafte PIN-Eingabe die erste Sanktion ausgelöst wird und dass im Falle, dass dieselbe fehlerhafte PIN-Eingabe, insbesondere unmittelbar nach der erstmaligen Eingabe der fehlerhaften PIN-Eingabe, erneut eingegeben wird, die zweite Sanktion ausgelöst wird.

15. Verfahren nach einem der Ansprüche 12 bis 14,
**dadurch gekennzeichnet,**
**dass** die zweite Sanktion nur dann erfolgt, wenn eine offensichtlich fehlerhafte PIN unmittelbar hintereinander eingegeben wird.

16. Verfahren nach einem der Ansprüche 12 bis 15,
**dadurch gekennzeichnet,**
**dass** als erste Sanktion ein Inkrementieren oder Dekrementieren des Zählerstandes eines Fehlerzählers um einen vorgegebenen ersten Wert vorgesehen ist.

17. Verfahren nach einem der Ansprüche 12 bis 16,
**dadurch gekennzeichnet,**
**dass** als zweite Sanktion ein Inkrementieren bzw. Dekrementieren des Zählerstandes eines Fehlerzählers um einen vorgegebenen zweiten Wert, der geringer als der erste Wert ist, vorgesehen ist.

18. Verfahren nach einem der Ansprüche 12 bis 16,
**dadurch gekennzeichnet,**
**dass** als zweite Sanktion ein Inkrementieren bzw. Dekrementieren des Zählerstandes eines Fehlerzählers unterbleibt.

19. Verfahren nach einem der Ansprüche 16 bis 18,
**dadurch gekennzeichnet,**
**dass** der Fehlerzähler eine Sanktionsschwelle aufweist, die einem vorgegebenen Zählerstand entspricht, und dass für den Fall, dass der aktuelle Zählerstand den vorgegebenen Zählerstand überschreitet, eine Sanktionsfolgeaktion, die unmittelbar auf die PIN-geschützten Einrichtung (15) gerichtet ist, ausgelöst wird.

20. Verfahren nach Anspruch 19,
**dadurch gekennzeichnet,**
**dass** als Sanktionsfolgeaktion eine temporäre oder dauerhafte Sperrung, ein Einbehalten oder ein Zerstören der PIN-geschützten Einrichtung (15) vorgesehen ist.

21. Verfahren nach einem der vorstehenden Ansprüche,
**dadurch gekennzeichnet,**
**dass** als PIN-geschützte Einrichtung (15) eine EC-Karte, Scheckkarte, Kreditkarte, Multimediakarte, SIM-Karte, Telefonkarte, Mobilfunktelefon, drahtgebundenes Telefon, Kopierer, Fax, PC-Gerät, Laptop, Gebäude-Zugangsberechtigungssystem und/oder KFZ-Sicherheitssystem vorgesehen ist.

22. Verfahren nach einem der vorstehenden Ansprüche,
**dadurch gekennzeichnet,**
**dass** als PIN eine mehrstellige Zahlenkombination, Buchstabenkomination, Symbolkombination oder eine Mischung daraus vorgesehen ist.

23. Verfahren nach einem der vorstehenden Ansprüche,
**dadurch gekennzeichnet,**
**dass** als PIN eine reine Zahlenkombination in dezimaler Codierung vorgesehen ist.

24. Vorrichtung zur Authentifikation PIN-bezogener Eingaben für eine PIN-geschützte Einrichtung (15),
- mit einer Vorrichtung insbesondere einer Tastatur (11), zur PIN-Eingabe,
- mit einer Auswerteeinrichtung (12, 13, 14) zur Überprüfung der PIN-Eingabe nach Maßgabe eines Verfahrens nach einem der vorstehenden Ansprüche.

25. Vorrichtung nach Anspruch 24,
**dadurch gekennzeichnet,**
**dass** die Auswerteeinrichtung (12, 13, 14) einen Fehlerzähler (13) aufweist, dessen Zählerstand als Folge der ersten Sanktion um den ersten vorgegebenen Wert inkrementiert bzw. dekrementiert wird, und der ausgangsseitig ein Zählerstandssignal(X4) ausgibt.

26. Vorrichtung nach einem der vorstehenden vorrichtungsbezogenen Ansprüche,
**dadurch gekennzeichnet,**
**dass** die Auswerteeinrichtung (12, 13, 14) eine Vergleichseinrichtung (14) und einen Speicher, in dem eine Sanktionsschwelle abgelegt ist, aufweist, wobei die Vergleichseinrichtung (14) das Zählerstandssignal (X4) aufnimmt, den aktuellen Zählerstand des Fehlerzählers (13) mit der gespeicherten Sanktionsschwelle vergleicht und für den Fall, dass der aktuelle Zählerstand diese Sanktionsschwelle über- oder unterschreitet, ein Signal (X5) zum Auslösen einer Sanktionsfolgeaktion ausgibt.

27. Vorrichtung nach einem der vorstehenden vorrichtungsbezogenen Ansprüche,
**dadurch gekennzeichnet,**
**dass** die Auswerteeinrichtung (12, 13, 14) als programmgesteuerte Einrichtung (12), zum Beispiel als Mikrocontroller, ausgebildet ist.
